# EUROPÄISCHE PATENTSCHRIFT

(11) **EP 3 717 152 B1**
(45) Veröffentlichungstag und Bekanntmachung des Hinweises auf die Patenterteilung: **16.02.2022**
(21) Anmeldenummer: 18786763.5
(22) Anmeldetag: 15.10.2018
(51) Int. Cl.: B22F 10/20, B22F 12/00, B41J 2/14, B22F 3/115, B33Y 30/00

(54) **DRUCKKOPF FÜR EINEN 3D-DRUCKER**
PRINTHEAD FOR A 3D PRINTER
TÊTE D'IMPRESSION POUR IMPRIMANTE 3D

(30) Priorität: 27.11.2017 DE 102017221156; 05.12.2017 DE 102017221959
(43) Veröffentlichungstag der Anmeldung: 07.10.2020
(73) Patentinhaber: Robert Bosch GmbH, 70442 Stuttgart (DE)
(72) Erfinder: MAIER, Eberhard, 73257 Koengen (DE); FRIEDRICH, Viktor, 72160 Horb (DE); SCHWEIZER, Benjamin, 72160 Horb (DE); SCHAEUFFELE, Benjamin, 71665 Vaihingen/Enz (DE)
(86) Internationale Anmeldenummer: PCT/EP2018/078002
(87) Internationale Veröffentlichungsnummer: WO 2019/101438

(56) Entgegenhaltungen:
- EP-A1- 0 822 020
- WO-A1-96/22884
- TAIK-MIN LEE ET AL: "Gap Adjustable Molten Metal DoD Inkjet System With Cone-Shaped Piston Head", JOURNAL OF MANUFACTURING SCIENCE AND ENGINEERING, Bd. 130, Nr. 3, Juni 2008 (2008-06), Seiten 031113-1-031113-5, XP055525342, US ISSN: 1087-1357, DOI: 10.1115/1.2917367
- LUO JUN ET AL: "Impact-driven ejection of micro metal droplets on-demand", INTERNATIONAL JOURNAL OF MACHINE TOOLS AND MANUFACTURE, ELSEVIER, AMSTERDAM, NL, Bd. 106, 5. April 2016 (2016-04-05), Seiten 67-74, XP029533342, ISSN: 0890-6955, DOI: 10.1016/J.IJMACHTOOLS.2016.04.002
- TAIK-MIN LEE ET AL: "Drop-on-Demand Solder Droplet Jetting System for Fabricating Microstructure", IEEE TRANSACTIONS ON ELECTRONICS PACKAGING MANUFACTURING, IEEE, PISCATAWAY, NY, US, Bd. 31, Nr. 3, Juli 2008 (2008-07), Seiten 202-210, XP011229699, ISSN: 1521-334X, DOI: 10.1109/TEPM.2008.926285

## Beschreibung

Die Erfindung betrifft einen 3D-Drucker.

### Stand der Technik

Ein 3D-Drucker für ein thermoplastisches Material erhält eine feste Phase dieses Materials als Ausgangsmaterial, erzeugt daraus eine flüssige Phase und bringt diese flüssige Phase selektiv an den Stellen, die zu dem zu erzeugenden Objekt gehören, auf. Ein solcher 3D-Drucker umfasst einen Druckkopf, in den das Ausgangsmaterial geschmolzen wird. Weiterhin sind Mittel zur Erzeugung einer Relativbewegung zwischen dem Druckkopf und der Arbeitsfläche, auf der das Objekt entstehen soll, vorgesehen. Dabei können entweder nur der Druckkopf, nur die Arbeitsfläche oder aber sowohl der Druckkopf als auch die Arbeitsfläche bewegt werden.

Der Druckkopf hat einen ersten Betriebszustand, in dem flüssiges Material aus ihm austritt, und einen zweiten Betriebszustand, in dem kein flüssiges Material aus ihm austritt. Der zweite Betriebszustand wird beispielsweise dann eingenommen, wenn eine andere Position auf der Arbeitsfläche angefahren werden und auf dem Weg dorthin kein Material deponiert werden soll. Zwischen den beiden Betriebszuständen des Druckkopfes kann beispielsweise umgeschaltet werden, indem der Vortrieb des festen Ausgangsmaterials ein- bzw. ausgeschaltet wird.

Gegenüber thermoplastischen Kunststoffen haben Metalle einen wesentlich höheren Schmelzpunkt und zugleich im flüssigen Zustand eine wesentlich geringere Viskosität.

Die zum Zeitpunkt dieser Anmeldung noch nicht veröffentlichte Schrift DE102016224047 zeigt einen Druckkopf für einen 3D-Drucker, insbesondere Metalldrucker, umfassend ein Gehäuse, eine Vorrichtung zur Zuführung eines Metalls, einen Kolben, ein Reservoir mit einer Austrittsöffnung und eine Aktorvorrichtung zur Verschiebung des Kolbens.

Sie zeichnet sich dadurch aus, dass das Reservoir einen Schmelzbereich und einen Verdrängerraum für eine flüssige Phase des Metalls aufweist, wobei der Schmelzbereich an einer inerten Atmosphäre angrenzt und mit dem Verdrängerraum derart verbunden ist, dass durch die Verschiebung des Kolbens die flüssige Phase des Metalls zum Durchtritt durch die Austrittsöffnung anregbar ist.

Aus dem Stand der Technik sind Kolbenformen mit flachen Oberflächen bekannt. Diese haben den Nachteil, dass sich unter, bzw. in der Mitte der Oberfläche sogenannte "Totwasserzonen" ausbilden können. In diesen Zonen bewegt sich die Schmelze nicht mehr relativ zum Kolben. Für den Fall, dass sich in der Schmelze Gas-, bzw. Lufteinschlüssen bilden, können diese nicht von der Oberfläche des Stempels abwandern und bilden nicht gewünschte Kompressionszonen.

Da metallische Schmelzen eine sehr hohe Oberflächenspannung besitzen, reicht oftmals der sehr große Dichteunterschied zwischen Luft und Schmelze nicht aus, um Gas-, bzw. Lufteinschlüsse nach oben steigen zu lassen.

Ferner verbleiben bei der Inbetriebnahme eines Druckkopfes Gaseinschlüsse auf der Oberfläche, bzw. der Unterseite des Stempels und es sind aufwändige Arbeitsschritte notwendig, um die Gaseinschlüsse zu verringert, bzw. zu entfernen.

Befinden sich im Betrieb des 3D-Druckers Gaseinschlüsse im Verdrängerraum, wirken diese als kompressibles Medium und dämpfen den Druckstoß des

Stempels, so dass der Druckprozess unpräzise werden oder sogar zum Erliegen kommen kann.

Die WO96/22884 A1 sowie der Artikel von TAIK-MIN LEE ET AL: "Gap Adjustable Molten Metal DoD Inkjet System With Cone-Shaped Piston Head" im JOURNAL OF MANUFACTURING SCIENCE AND ENGINEERING, Bd. 130, Nr. 3, Juni 2008, Seiten 031113-1-031113-5, offenbaren einen Druckkopf für einen 3D-Drucker zur

Ausbringung geschmolzenen Metalls.

Der Erfindung liegt die Aufgabe zugrunde, einen Kolben für einen Druckkopf eines 3D-Druckers und einen Druckkopf bereitzustellen, der den Einfluss von Gaseinschlüssen im Verdrängerraum vermindert und einen Druckkopf bereitzustellen, der eine geeignete Ableitung der Gaseinschlüsse aus dem Verdrängerraum ermöglicht.

### Offenbarung der Erfindung

Die Aufgabe wird durch den erfindungsgemäßen Druckkopf eines 3D-Druckers mit den Merkmalen gemäß Anspruch 1 erfüllt.

Der erfindungsgemäße Druckkopf eines 3D-Metalldruckers, umfasst einen Kolben mit einer Kolbenstange und einem Stempel, wobei der Stempel eine Druckseite aufweist, die eine spitz zulaufende Oberfläche aufweist.

Die spitz zulaufende Oberfläche der Druckseite des Stempels sorgt für eine Geometrie des Stempels, durch die es in vorteilhafter Weise ermöglicht wird, dass in einer flüssigen Phase eines Metalls auftretende Gaseinschlüsse an der Oberfläche abgleiten können und sich nicht an der Oberfläche des Stempels ansammeln. Im Betrieb des 3D-Druckers, bzw. einer vertikalen Bewegung des Kolbens, werden auftretende Gaseinschlüsse an der Oberfläche des Stempels vorbei nach oben getrieben. Je nach Viskosität der flüssigen Phase des Metalls, bzw. der Schmelze, und Auftrieb der Gas-, bzw. Lufteinschlüsse können diese an der Oberfläche des Stempels vorbei gleiten und werden von dieser abgeführt. Ferner ergibt sich aus der Geometrie des Stempels, dass Teile der flüssigen Phase des Metalls durch diese ersetzt werden und somit in vorteilhafter Weise weniger flüssige Phase des Metalls mit Gaseinschlüssen versetzt ist.

Erfindungsgemäß ist die Oberfläche des Stempels kegelförmig ausgebildet. Diese Geometrie ermöglicht in vorteilhafter Weise, dass Gaseinschlüsse an der Oberfläche des Stempels abgleiten können und sich nicht negativ auf die Funktion des Druckkopfes auswirken.

Die Kegelform kann je nach Viskosität der flüssigen Phase des Metalls unterschiedliche Winkel aufweisen.

Der erfindungsgemäße Druckkopf für einen 3D-Metalldrucker, umfasst ein Gehäuse, eine Vorrichtung zur Zuführung eines Metalls, ein Reservoir für eine flüssige Phase des Metalls, eine Düsenvorrichtung mit einer Führungshülse und einer Düsenplatte und einen Kolben, wobei der Stempel, die Führungshülse und die Düsenplatte einen Verdrängerraum zur Aufnahme der flüssigen Phase des Metalls ausbilden. Der Stempel und die Führungshülse bilden zumindest einen Bereich zur Durchführung der flüssigen Phase zwischen dem Reservoir und dem Verdrängerraum aus.

Der Bereich zur Durchführung der flüssigen Phase des Metalls zwischen dem Reservoir und dem Verdrängerraum sorgt in vorteilhafter Weise nicht nur für den Austausch der flüssigen Phase sondern auch für den Transport, bzw. die Ableitung von Gaseinschlüssen vom Verdrängerraum in das Reservoir. Der Anteil der Gaseinschlüsse im Verdrängerraum bestimmt maßgeblich die Qualität der Funktion des gesamten Druckkopfes und die Reproduzierbarkeit der Druckergebnisse.

Der erfindungsgemäße Druckkopf unterstützt ferner einen gleichmäßigen Druckaufbau im Verdrängerraum, wodurch verbesserte Aktuierungsstöße, bzw. ein verbesserter Ausstoß der flüssigen Phase des Metalls ermöglicht wird. Die Reproduzierbarkeit der Druckergebnisse wird somit deutlich verbessert.

Ferner ist der Bereich zur Durchführung der flüssigen Phase derart ausgebildet, dass innerhalb des Verdrängerraums in der flüssigen Phase auftretende Gaseinschlüsse während eines Kolbenhubes in Richtung der Düsenplatte an der Druckseite des Stempels vorbei durch den Bereich in das Reservoir verdrängbar, bzw. ableitbar sind.

Dadurch wird in vorteilhafter Weise ermöglicht, dass bei einer Hubbewegung des Kolbens eine relative Bewegung der flüssigen Phase, bzw. der Schmelze entlang der Oberfläche des Stempels realisierbar ist. Diese, durch die Hubbewegung entstandene, Strömung wiederum, bewegt, bzw. schiebt die Gaseinschlüsse an der Oberfläche des Stempels entlang und führt diese zu dem genannten Bereich. Insbesondere bei einer Inbetriebnahme des Druckkopfes, wenn der Stempel in die Schmelze abgesenkt wird, teilt die Oberfläche der Druckseite des Stempels die Schmelze von der Mitte des Stempels aus und die Schmelze schiebt sich an der Oberfläche des Stempels entlang, so dass in vorteilhafter Weise Gaseinschlüsse aus dem Verdrängerraum in Richtung Reservoir verdrängt werden.

Ferner weist der Bereich einen Spalt zur Ableitung von Gaseinschlüssen aus dem Verdrängerraum in das Reservoir auf. Durch den Spalt wird in vorteilhafter Weise die Ableitung der Gaseinschlüsse an der Oberfläche des Stempels entlang in das Reservoir vereinfacht. Insbesondere bei einer Inbetriebnahme des Druckkopfes, wenn der Stempel in die Schmelze abgesenkt wird, teilt die Oberfläche der Druckseite des Stempels die Schmelze von der Mitte des Stempels aus und die Schmelze schiebt sich an der Oberfläche des Stempels entlang, so dass in vorteilhafter Weise Gaseinschlüsse aus dem Verdrängerraum durch den Spalt in Richtung Reservoir verdrängt werden.

Erfindungsgemäß ist der Spalt in einer ersten an der Druckseite des Stempels angeordneten Ebene als Ringspalt und in einer zweiten Ebene als zumindest eine axiale Ausnehmung ausgebildet. Durch diese Anordnung wird die Verdrängung von Gaseinschlüssen aus dem Verdrängerraum in das Reservoir optimiert. Zudem wird in vorteilhafter Weise eine Durchführung der flüssigen Phase des Metalls, bzw. eine Durchführung der Schmelze durch den Spalt verbessert.

In einer Weiterbildung weist die Düsenplatte an ihrer zum Verdrängerraum ausgebildeten Oberfläche eine Ausnehmung auf, die entsprechend der Oberfläche des Stempels ausgebildet ist. Die Ausnehmung in der Düsenplatte weist somit eine Negativform der Druckfläche des Stempels auf so dass der Stempel mit seiner Oberfläche an der Oberfläche der Düsenplatte anliegen kann. Durch diese Ausbildung der Düsenplatte in Kombination mit dem Stempel bietet der Druckkopf in vorteilhafter Weise die Möglichkeit, Gaseinschlüsse vollständig aus dem Verdrängerraum zu entfernen, indem der Stempel bis zum Anschlag zur Düsenplatte bewegt wird. In diesem Fall sind die Oberflächenkonturen des Stempels und der Düsenplatte aufeinander angepasst.

Anschließend wird der Stempel, nachdem er zur Düsenplatte bewegt wurde, wieder in eine Arbeitsposition innerhalb der Führungshülse zurückgezogen. Zur Verhinderung eines Nachströmens von Luft durch eine Austrittsöffnung der Düsenplatte, kann während der Aufwärtsbewegung des Kolbens, die Austrittsöffnung beispielsweise durch ein kontrolliertes Einfrieren geschlossen werden. Hierzu wird beispielsweise durch Reduzierung der Heizleistung des Induktors die Temperatur im Reservoir oder der Induktor wird komplett abgeschaltet. Da die Düsenplatte relativ zum Reservoir deutlich mehr exponiert ist und eine große, relative Konvektions- und Abstrahlungsfläche aufweist, wird die Erstarrung der flüssigen Phase des Metalls, bzw. der Schmelze in der Regel von der Düsenplatte ausgehen. Alternativ kann auch über eine externe Düse kontrolliert Stickstoff auf die Düsenplatte geleitet werden und dadurch die Schmelze punktuell eingefroren werden.

Der negative Effekt durch Gaseinschlüsse im Verdrängerraum, bezüglich der Tropfenbildung beim 3D-Druck, wird durch die oben genannten Merkmale der Erfindung verringert, bzw. verhindert. Durch das Ableiten der Gaseinschlüsse wird für eine ausreichende Entlüftung des Verdrängerraums gesorgt. Zum einen bei der Inbetriebnahme und zum anderen bei Gaseinschlüssen, die während des Betriebes des Druckkopfes, durch eine beispielsweise nicht optimale Aktuierung des Kolbens, auftreten, wenn Luft über die Düsenplatte beim Rückhub angesaugt wird. Die Folge von teilweisem oder vollständigem Aussetzen der Tropfenbildung zum Erzeugen eines Gegenstandes durch 3D-Druck wird verhindert.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

### Es zeigen:

- Fig. 1: Eine Schnittzeichnung eines nicht erfindungsgemäßen Druckkopfes.
- Fig. 2: eine detaillierte Darstellung eines Kolbens eines erfindungsgemäßen Druckkopfes mit einer Führungshülse in einer Ausführungsform,
- Fig. 3: eine Darstellung von Druckwellen in einem Druckkopf und
- Fig. 4: eine detaillierte Darstellung eines Kolbens eines erfindungsgemäßen Druckkopfes mit einer Führungshülse in einer weiteren Ausführungsform.

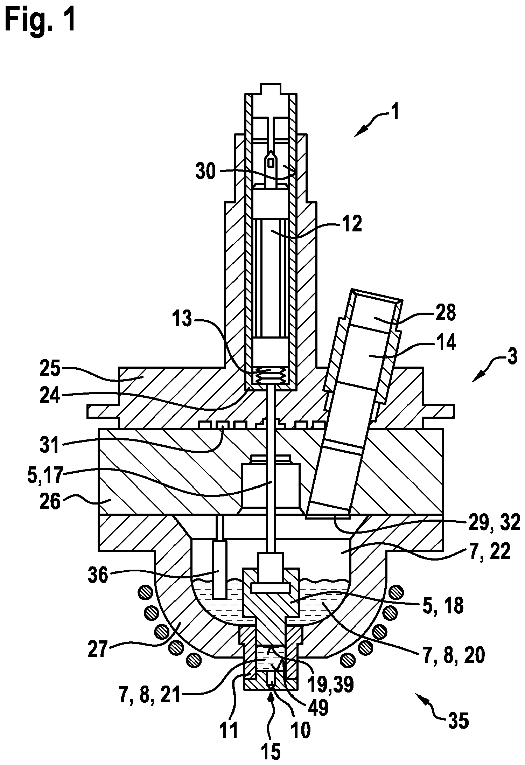

Fig. 1 zeigt ein nicht erfindungsgemäßes Beispiel eines Druckkopfes 1 für einen 3D-Drucker.

Der Druckkopf 1 umfasst ein Gehäuse 3, eine Vorrichtung 28 zur Zuführung eines Metalls 14 in fester Phase, ein Reservoir 7, 27, eine Düsenvorrichtung 2 mit einer Austrittsöffnung 10 und einen Kolben 5. Ferner umfasst der Druckkopf eine Aktorvorrichtung 12 zur Verschiebung des Kolbens 5. Das Reservoir 7, 27 weist einen Schmelzbereich 20 und einen Verdrängerraum 21 für eine flüssige Phase 8 des Metalls 14 auf, wobei der Schmelzbereich 20 an einer inerten Atmosphäre 22 angrenzt und mit dem Verdrängerraum 21 derart verbunden ist, dass durch die Verschiebung des Kolbens 5 die flüssige Phase 8 des Metalls 14 zum Durchtritt durch die Austrittsöffnung 10 anregbar ist. Die flüssige Phase 8 des Metalls 14, bzw. das flüssige Metall 8 wird auch als Schmelze 8 bezeichnet und die inerte Atmosphäre 22 ist durch Einleitung eines Inertgases 22 in das Reservoir 7, 27 gebildet. Die Einleitung des Inertgases 22 findet bevorzugt über einen kalten Bereich des Druckkopfes 1 in das Reservoir 7, 27 statt.

Das Reservoir 7, 27 ist als Schmelztiegel 27 ausgebildet, wobei außerhalb des Schmelztiegels 27 ein Induktor 35 und innerhalb des Schmelztiegels ein Sensor 36, insbesondere ein Temperatursensor angeordnet sind. Zwischen dem Schmelztiegel 27 und dem Induktor 35, bzw. der Induktor Spule 35 kann sich optional noch ein nicht dargestellter Isolator befinden.

Die Grenze des Inertgases 22 zum flüssigen Metall 8 entspricht dem Füllstand des flüssigen Metalls 8 in dem Reservoir 7, 27.

Ferner ist das Gehäuse 3 mehrteilig ausgebildet, wobei es zumindest einen Kühlflansch 25, eine Isolierplatte 26 und das Reservoir 7, 27 umfasst. Temperaturempfindliche Bauteile der Messvorrichtung können somit vorteilhaft abgeschirmt werden.

Der Kolben 5 ist mehrteilig ausgebildet, wobei er zumindest eine Kolbenstange 17 aus einem metallischen Werkstoff und einen Stempel 18 aus Keramik umfasst. Die Kolbenstange 17 ragt ausgehend von der Aktorvorrichtung 12 durch den Kühlflansch 25 und der Isolierplatte 26 bis in das Reservoir 7, 27 hinein, wo sie in den Stempel 18 übergeht.

Der Kühlflansch 25 weist eine Ausnehmung 30 zur Aufnahme der Aktorvorrichtung 12, die als piezoelektrischer Aktor 12 ausgebildet ist, auf. Der piezoelektrische Aktor 12 ist während des Betriebs in der Ausnehmung 30 derart fixiert, dass er bei Anliegen einer Spannung einen Arbeitshub auf den Kolben 5, speziell auf die Kolbenstange 17 des Kolbens 5, ausübt. Die Kolbenstange 17 überträgt den Arbeitshub auf den Stempel 18, so dass dieser die flüssige Phase 8 des Metalls 14 zum Durchtritt durch die Austrittsöffnung 10 anregt. Der Kolben 5 ist ohne Aktuierung des Aktors 12 durch eine Feder 13 in eine Ausgangsstellung rückstellbar, wobei die Feder 13 in der Ausnehmung 30 des Kühlflanschs 25 zwischen einem Absatz 24 und dem Aktor 12 angeordnet ist. Die Feder 13 ist als Tellerfeder ausgebildet.

Ferner weist der Kühlflansch 25 Kühlkanäle 31 zur Kühlung auf. Die Kühlkanäle 31 sind zwischen dem Kühlflansch 25 und der Isolierplatte 26 angeordnet und werden mit einem Kühlmedium durchspült. Dies dient als Kühlung gegenüber der Erwärmung durch die Schmelze 8 und zum Kühlen des Aktors 12 im Betrieb. Der Kühlflansch 25 ist aus einem metallischen Werkstoff gebildet.

Die an dem Kühlflansch 25 auf Seiten der Kühlkanäle 31 anliegende Isolierplatte 26 ist aus einem wärmeisolierenden Material gebildet und derart ausgebildet, dass sie einen Wärmeübergang vom Reservoir 7, 27 zum Kühlflansch 25 vermindert.

Die Vorrichtung 28 zur Zuführung des Metalls 14, bzw. die Nachfülleinheit 28 mündet in das Reservoir 7, 27 und ist in dem Kühlflansch 25 und der Isolierplatte 26 angeordnet. Die Nachfülleinheit 28 ragt durch den Kühlflansch 25 und der Isolierplatte 26 hindurch und das Metall 14, bzw. das zu druckende Material 14 ist von außen durch die Vorrichtung 28 zuführbar. Bevorzugt können vordosierte Materialstücke, bzw. Pellets verwendet werden. Am Übergang der Isolierplatte 26 zum Reservoir 7, 27 befindet sich eine Öffnung 29 durch die das Material 14 in das Reservoir 7, 27 gelangt. Die Öffnung 29 ist durch eine Vorrichtung 32 verschließbar, so dass diese bevorzugt nur bei Zuführung des Materials 14 geöffnet ist, wodurch das Entweichen von Energie, bzw. Gas aus der inerten Atmosphäre 22 verringert wird.

Das Metall 14 gelangt in einer festen Phase 14 in den Schmelzbereich 20 des Schmelztiegels und wird durch den Induktor 35 erhitzt, bis es in eine flüssige Phase 8 übergeht. Bei Erreichen einer gewünschten Prozesstemperatur der Schmelze 8, die durch den Temperatursensor 36 ermittelt wird, und des kann der Druckkopf 1 den Betrieb aufnehmen. Der Stempel 18 des Kolbens 5 ist mit einer Druckseite 19 in der Schmelze 8, bzw. von Schmelze 8 umgeben und an der Verbindungsseite zur Kolbenstange 17 in der inerten Atmosphäre 22, bzw. von der inerten Atmosphäre 22 umgeben. Die Kolbenstange 17 kommt prozessbedingt nicht mit der Schmelze 8 in Berührung.

Die Keramik des Stempels 18 ist vorteilhafterweise sehr gut temperaturleitend, um die durch den Induktor 35 erzeugte Wärme gut in den Verdrängerraum 21 übertragen zu können.

Bei Aktuierung des piezoelektrischen Aktors 12 übt die in dieser Ausführung spitze, bzw. konische Druckseite 19, bzw. Oberfläche 39 des Stempels 18 einen Druck, bzw. Hub auf die Schmelze 8 im Verdrängerraum 21 in Richtung der Austrittsöffnung 10 aus und sorgt für einen Ausstoß eines Tropfens 15 durch die Düsenvorrichtung 2, bzw. der Austrittsöffnung 10 der Düsenvorrichtung 2. Die Düsenvorrichtung 2, insbesondere die Düsenplatte 9 ist austauschbar, wodurch der Einsatz von unterschiedlichen Düsengeometrien möglich ist. Dargestellt ist eine Düsenplatte 9 mit einer flachen Oberseite 49 in die eine Ausnehmung für die Austrittsöffnung 10 angeordnet ist. In einer für dieses Ausführungsbeispiel nicht dargestellten Weiterbildung kann die Düsenplatte 9 an ihrer zum Verdrängerraum 21 ausgebildeten Oberfläche 49 eine Ausnehmung aufweisen, die entsprechend der Oberfläche 39 des Stempels 18 ausgebildet ist.

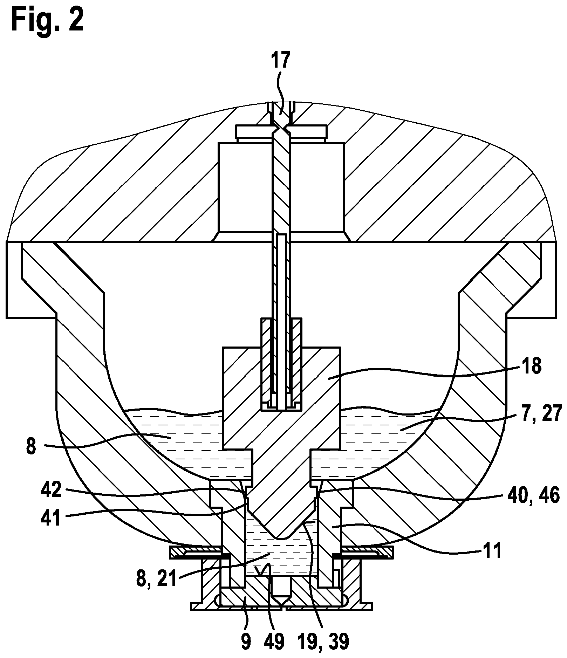

Fig. 2 zeigt eine detaillierte Darstellung des Kolbens 17 eines erfindungsgemäßen Druckkopfes 1 mit der Führungshülse 11 in einer Ausführungsform, wobei die Druckseite 19 des Stempels 18 eine konvexe Oberfläche 39, im speziellen eine kegelförmige Oberfläche 39 aufweist. Ferner stellt Fig. 2 einen Ausschnitt des erfindungsgemäßen Druckkopfes 1 dar, wobei der Stempel 18 und die Führungshülse 11 zumindest einen Bereich 40 zur Durchführung der flüssigen Phase 8 zwischen dem Reservoir 27 und dem Verdrängerraum 21 ausbilden. Der Bereich 40 ist derart ausgebildet, dass innerhalb des Verdrängerraums 21 in der flüssigen Phase 8 auftretende Gaseinschlüsse während eines Kolbenhubes in Richtung der Düsenplatte 9 an der Druckseite 19 des Stempels 18 vorbei durch den Bereich 40 in das Reservoir 7, 27 verdrängbar sind. Der Bereich 40 weist einen Spalt 46 zur Ableitung von Gaseinschlüssen aus dem Verdrängerraum 21 in das Reservoir 7, 27 auf und ist in einer ersten an der Druckseite 19 des Stempels 18 angeordneten Ebene 41 als Ringspalt und in einer zweiten Ebene 42 als zumindest eine axiale Ausnehmung ausgebildet.

In einer einfachen, nicht dargestellten Ausführung, kann der Spalt 46 ausschließlich als Ringspalt ausgebildet sein.

Es ist von Vorteil, wenn die zweite Ebene nicht dargestellte Teilbereiche aufweist, durch die der Stempel 18 konzentrisch in der kreisförmigen Führungshülse 11 geführt ist.

Dargestellt ist eine Düsenplatte 9 mit einer flachen Oberseite 49 in die eine Ausnehmung für die Austrittsöffnung 10 angeordnet ist. In einer für dieses

Ausführungsbeispiel nicht dargestellten Weiterbildung kann die Düsenplatte 9 an seiner zum Verdrängerraum 21 ausgebildeten Oberfläche 49 eine Ausnehmung aufweisen, die entsprechend der kegelförmigen Oberfläche 39 des Stempels 18 ausgebildet ist.

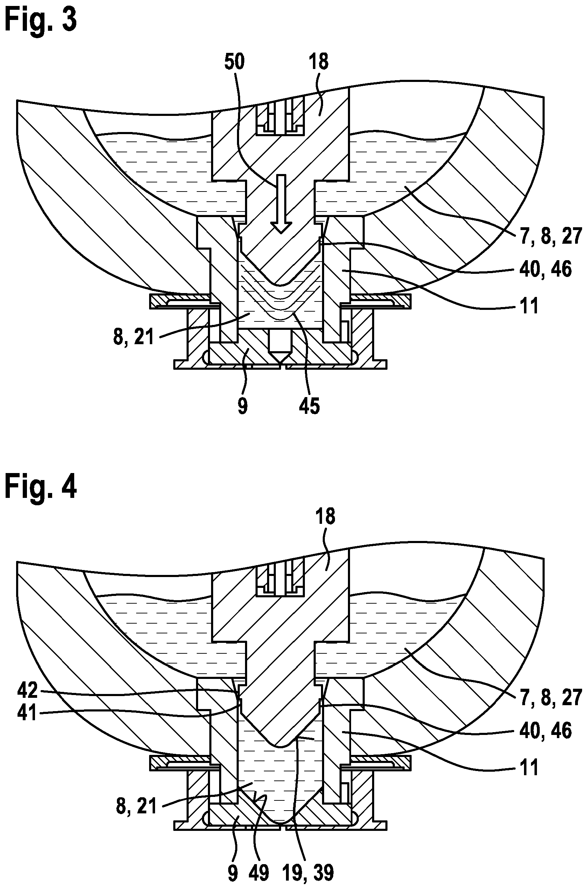

Fig. 3 zeigt eine Darstellung von Druckwellen 45 in dem Verdrängerraum 21 des Druckkopfes 1, die durch eine Hubbewegung des Kolbens 5, bzw. Stempels 18 erzeugt werden.

Für die Aktuierung bzw. den Druckstoß in Richtung 50 der Düsenplatte 9, hat die Oberfläche 39, bzw. Oberflächenkontur des Stempels 18 keine Auswirkung, da die Druckwelle 45 weiterhin in axialer Richtung 50 der Düsenplatte 9 aktuiert wird. Die Ausbreitung der Druckwellen 45 findet kollinear zur Kolbenbewegung statt.

Die Form der Oberfläche 39 des Stempels 18 hat vielmehr das Ziel, dass durch eine stromlinienförmige Kontur, bzw. Oberfläche 39 des Stempels 18 beim Eintauchen oder auch bei der hochfrequenten Aktuierung, die Schmelze 8 direkt an der Oberfläche 39 entlang streichen kann, so dass möglichst eine laminare Strömung der Schmelze 8 erreicht wird. Auftretende Gaseinschlüsse gleiten zumindest im Betrieb an der Oberfläche 39 des Stempels 18 ab und gelangen durch den Spalt 46 in dem Bereich 40 zwischen dem Stempel 18 und der Führungshülse 11 in das Reservoir 27.

Falls ungewünschte Gaseinschlüsse in der Schmelze 8 des Verdrängerraums 21 vorhanden sind, kann beispielsweise der gesamte Stempel 18 aus der Schmelze 8 ausgefahren werden und anschließend langsam wieder abgesenkt werden, um durch das Eindringen des Stempels 18 in die Schmelze 8 vorhandene Gaseinschlüsse an der Oberfläche 39 des Stempels 18 abgleiten zu lassen.

Fig.4 zeigt eine weitere Ausführungsform des Druckkopfes 1, wobei der Stempel 18 des Kolbens 5 eine Druckseite 19 mit einer konvexen, insbesondere kegelförmigen Oberfläche 39 aufweist. Ferner bilden der Stempel 18 und die Führungshülse 11 den Bereich 40 zur Durchführung der flüssigen Phase 8 zwischen dem Reservoir 27 und dem Verdrängerraum 21 aus, wobei der Spalt 46 in der ersten an der Druckseite 19 des Stempels 18 angeordneten Ebene 41 als Ringspalt und in der zweiten Ebene 42 als zumindest eine axiale Ausnehmung ausgebildet ist.

Die Düsenplatte 9 weist an ihrer zum Verdrängerraum 21 ausgebildeten Oberfläche 49 eine Ausnehmung auf, die entsprechend der Oberfläche 39 des Stempels 18 ausgebildet ist. Die Ausnehmung in der Düsenplatte 9 weist somit eine Negativform der Druckfläche 19 des Stempels 18 auf so dass der Stempel 18 mit seiner Oberfläche 39 an der Oberfläche 49 der Düsenplatte 9 anliegen, bzw. komplett eintauchen kann.

Die hier dargestellte Ausführungsform ermöglicht, zusätzlich zur optimierten Stempelgeometrie, durch die eine verbesserte Entgasung des Verdrängerraums 11 möglich ist, ein Entgasen, bzw. Entlüften vor dem Betrieb, bzw. während der Inbetriebnahme des Druckkopfes 1.

Zur Entfernung der Gaseinschlüsse aus der Schmelze 8 des Verdrängerraums 21 ist der Stempel 18 komplett, möglichst bis zum Anliegen, in die Ausnehmung der Düsenplatte 9 zu bewegen. Dabei wird erreicht, dass keine Gaseinschlüsse mehr zwischen der Oberfläche 39 des Stempels 18 und der Oberfläche 49 der Düsenplatte 9 vorhanden sind. Beim Zurückziehen des Stempels 18 in eine Arbeitsposition innerhalb der Führungshülse 11 findet eine Befüllung des Verdrängerraums 21 mit flüssiger Phase 8 des Metalls aus dem Reservoir 27 durch den Bereich 40 statt.

Zur Verhinderung eines Nachströmen von Gas durch die Austrittsöffnung 10 der Düsenplatte 9 in den Verdrängerraum 21, kann die Austrittsöffnung 10 verschlossen werden. Entweder mechanisch durch eine nicht dargestellte Verschlussvorrichtung oder durch ein kontrolliertes Abkühlen des Bereichs um die Austrittsöffnung 10.

Die Abkühlung wird beispielsweise erreicht, indem die Temperatur im Reservoir, bzw. Tiegel durch eine Reduzierung der Heizleistung des Induktors 35 reduziert wird. Da die Düsenplatte 9 relativ zum Tiegel 27 deutlich mehr exponiert ist und eine große relative Konvektions- und Abstrahlungsfläche hat, wird die Erstarrung der Schmelze in der Regel von der Düsenplatte 9 ausgehen.

In einer weiteren Variante, kann die Düsenplatte 9, bzw. die Austrittsöffnung 10 auch punktuell durch Aufbringen von flüssigem Stickstoff eingefroren werden. Der flüssige Stickstoff kann beispielsweise durch eine nicht dargestellte Düse auf die Düsenplatte gerichtet werden. Nach der Befüllung des Verdrängerraums 21 mit Schmelze 8, verflüssigt sich die eingefrorene Schmelze 8 innerhalb der Austrittsöffnung 10, so dass der Druckkopf wieder betriebsbereit ist.

## Patentansprüche

1. Druckkopf (1) für einen 3D-Drucker, insbesondere Metalldrucker, umfassend ein Gehäuse (3), eine Vorrichtung (28) zur Zuführung eines Metalls (14), ein Reservoir (7, 27) für eine flüssige Phase (8) des Metalls (14), eine Düsenvorrichtung (2) mit einer Führungshülse (11) und einer Düsenplatte (9) und einen Kolben (5), umfassend eine Kolbenstange (17) und einen Stempel (18), wobei der Stempel (18) eine Druckseite (19) aufweist, die eine spitz zulaufende Oberfläche (39) aufweist, wobei der Stempel (18), die Führungshülse (11) und die Düsenplatte (9) einen Verdrängerraum (21) ausbilden, wobei der Stempel (18) und die Führungshülse (11) zumindest einen Bereich (40) zur Durchführung der flüssigen Phase (8) zwischen dem Reservoir (27) und dem Verdrängerraum (21) ausbilden, wobei der Bereich (40) derart ausgebildet ist, dass innerhalb des Verdrängerraums (21) in der flüssigen Phase (8) auftretende Gaseinschlüsse während eines Kolbenhubes in Richtung der Düsenplatte (9) an der Druckseite (19) des Stempels (18) vorbei durch den Bereich (40) in das Reservoir (7, 27) verdrängbar sind, wobei der Bereich (40) einen Spalt (46) zur Ableitung von Gaseinschlüssen aus dem Verdrängerraum (21) in das Reservoir (7, 27) aufweist wobei die Oberfläche (39) des Stempels kegelförmig ausgebildet ist, **dadurch gekennzeichnet, dass** der Spalt (46) in einer ersten an der Druckseite (19) des Stempels (18) angeordneten Ebene (41) als Ringspalt und in einer zweiten Ebene (42) als zumindest eine axiale Ausnehmung ausgebildet ist.

2. Druckkopf (1) nach Anspruch 1, wobei die Düsenplatte (9) an ihrer zum Verdrängerraum (21) ausgebildeten Oberfläche (49) eine Ausnehmung aufweist, die entsprechend der Oberfläche (39) des Stempels (18) ausgebildet ist.

## Claims

1. Printhead (1) for a 3D printer, in particular a metal printer, comprising a housing (3), a device (28) for supplying a metal (14), a reservoir (7, 27) for a liquid phase (8) of the metal (14), a nozzle device (2) having a guide sleeve (11) and a nozzle plate (9), and a piston (5) comprising a piston rod (17) and a plunger (18), wherein the plunger (18) has a pressure side (19), which has a surface (39) that tapers to a point, wherein the plunger (18), the guide sleeve (11) and the nozzle plate (9) form a displacement space (21), wherein the plunger (18) and the guide sleeve (11) form at least one region (40) for conducting the liquid phase (8) between the reservoir (27) and the displacement space (21), wherein the region (40) is designed in such a way that gas inclusions that occur in the liquid phase (8) within the displacement space (21) during a piston stroke are able to be displaced through the region (40), past the pressure side (19) of the plunger (18), in the direction of the nozzle plate (9), into the reservoir (7, 27), wherein the region (40) has a gap (46) for the discharge of gas inclusions from the displacement space (21) into the reservoir (7, 27), wherein the surface (39) of the plunger is of conical design, **characterized in that** the gap (46) is formed as an annular gap in a first plane (41) arranged on the pressure side (19) of the plunger (18) and is formed as at least one axial recess in a second plane (42).

2. Printhead (1) according to Claim 1, wherein the nozzle plate (9) has, on its surface (49) formed facing the displacement space (21), a recess designed to correspond to the surface (39) of the plunger (18).

## Revendications

1. Tête d'impression (1) pour une imprimante 3D, en particulier une imprimante utilisant du métal, comprenant un boîtier (3), un dispositif (28) pour alimenter un métal (14), un réservoir (7, 27) pour une phase liquide (8) du métal (14), un dispositif de buse (2) doté d'une douille de guidage (11) et d'un porte-buse (9), et un piston (5) comprenant une tige de piston (17) et un poinçon (18), le poinçon (18) présentant un côté d'impression (19) qui présente une surface conique (39), le poinçon (18), la douille de guidage (11) et le porte-buse (9) réalisant une chambre de déplacement (21),
le poinçon (18) et la douille de guidage (11) réalisant au moins une zone (40) pour faire passer la phase liquide (8) entre le réservoir (27) et la chambre de déplacement (21),
la zone (40) étant réalisée de telle sorte qu'à l'intérieur de la chambre de déplacement (21), des inclusions de gaz apparaissant dans la phase liquide (8) peuvent être déplacées pendant une course de piston en direction du porte-buse (9) en passant devant le côté impression (19) du poinçon (18) à travers la zone (40) dans le réservoir (7, 27),
la zone (40) présentant une fente (46) pour évacuer des inclusions de gaz de la chambre de déplacement (21) au réservoir (7, 27),
la surface (39) du poinçon étant réalisée en forme de cône,
**caractérisée en ce que** la fente (46) est réalisée sous forme de fente annulaire dans un premier plan (41) disposé sur le côté impression (19) du poinçon (18) et est réalisée sous forme d'au moins un creux axial dans un deuxième plan (42).

2. Tête d'impression (1) selon la revendication 1, dans laquelle le porte-buse (9) présente sur sa surface (49) réalisée en chambre de déplacement (21 un creux qui est réalisé selon la surface (39) du poinçon (18).
